# EUROPÄISCHE PATENTSCHRIFT

(11) **EP 3 152 420 B1**
(45) Veröffentlichungstag und Bekanntmachung des Hinweises auf die Patenterteilung: **10.04.2019**
(21) Anmeldenummer: 15720324.1
(22) Anmeldetag: 29.04.2015
(51) Int. Cl.: F01N 3/20

(54) **EINSPRITZMODUL UND ABGASSTRANG MIT EINSPRITZMODUL**
INJECTION MODULE AND EXHAUST SYSTEM HAVING AN INJECTION MODULE
MODULE D'INJECTION ET LIGNE D'ÉCHAPPEMENT COMPRENANT UN MODULE D'INJECTION

(30) Priorität: 04.06.2014 DE 102014210638
(43) Veröffentlichungstag der Anmeldung: 12.04.2017
(73) Patentinhaber: Robert Bosch GmbH, 70442 Stuttgart (DE)
(72) Erfinder: BUERGLIN, Markus, 71254 Ditzingen (DE)
(86) Internationale Anmeldenummer: PCT/EP2015/059357
(87) Internationale Veröffentlichungsnummer: WO 2015/185297

(56) Entgegenhaltungen:
- WO-A1-2012/157066
- DE-A1-102011 018 569
- DE-A1-102011 087 195
- US-A1- 2008 311 010

## Beschreibung

Die Erfindung betrifft ein Einspritzmodul, insbesondere ein Einspritzmodul zum Einspritzen eines Reduktionsmittels in den Abgasstrang eines Verbrennungsmotors, und einen Abgasstrang, der mit einem derartigen Einspritzmodul ausgestattet ist.

### Stand der Technik

Zum Entsticken der Abgase von Dieselmotoren hat sich die SCR-Technik ("selective catalytic reduction") unter Einsatz eines harnstoffhaltigen flüssigen Reduktionsmittels ("AdBlue®") bewährt. Hierbei wird das flüssige Reduktionsmittel, eine wässrige Harnstofflösung, stromaufwärts eines Reduktionsmittelkatalysator in den Abgasstrom eingesprüht und dabei fein zerstäubt, bevor das Abgas-Reduktionsmittel-Gemisch dem SCR-Katalysator zugeführt wird.

Um einen hohen Umsetzungsgrad der Stickoxide bei möglichst geringem Reduktionsmittelschlupf zu erreichen, muss das Reduktionsmittel möglichst homogen auf der Eintrittsfläche des Katalysators verteilt werden. Dies wird bisher entweder durch im Abgasrohr angebrachte Mischer oder durch eine lange Mischstrecke zwischen der Stelle, an der das Reduktionsmittel eindosiert wird, und dem Katalysator erreicht.

DE 44 17 238 A1 offenbart eine Einrichtung zur Verminderung von Stickoxiden in den Abgasen eines Verbrennungsmotors mit einer Einlaufkammer, einem Hydrolyse-Katalysator, einem DeNOx-Katalysator und einem Oxidationskatalysator, bei der die Einlaufkammer, der Hydrolyse-Katalysator, der DeNOx-Katalysator und der Oxidationskatalysator eine im Wesentlichen zylindrische, vom Abgasstrom in der genannten Reihenfolge durchströmbare Einheit bilden und der Durchmesser der Einlaufkammer den Durchmesser des Hydrolyse-Katalysators übersteigt. Hierdurch wird erreicht, dass das in der Einlaufkammer mit einem Reduktionsmittel vermischte Abgas mit einer homogenen Verteilung des Reduktionsmittels und einer über den Querschnitt des Abgasstranges möglichst homogenen Abgasstromdichte in den Katalysator eintritt.

DE 10 2010 039 079 A1 beschreibt eine Einspritzvorrichtung zum Einspritzen eines Fluids in einen Abgasstrang eines Verbrennungsmotors mit einem ersten Strömungsbereich, der so ausgebildet ist, dass das Fluid im Betrieb im ersten Strömungsbereich im Wesentlichen in einer ersten Strömungsrichtung, die parallel zu einer Ventilachse ist, strömt; einer Ventilplatte, welche den ersten Strömungsbereich stromabwärts begrenzt, wobei in der Ventilplatte eine Ventilöffnung ausgebildet ist, die in einer Ebene orthogonal zur Ventilachse einen kleineren Querschnitt als der erste Strömungsbereich hat; und wenigstens einer Spritzlochplatte, die stromabwärts der Ventilöffnung ausgebildet ist und wenigstens ein Einspritzloch aufweist, das derart ausgebildet ist, dass das Fluid im Betrieb in einer zweiten Strömungsrichtung aus dem Einspritzloch strömt. Dabei weist die zweite Strömungsrichtung eine in Richtung auf die Ventilachse ausgerichtete Komponente auf.

Um die erwünschte Homogenisierung des Reduktionsmittels mit dem Abgas zu erreichen, ist ein möglichst flacher, aber vollflächiger Reduktionsmittel-Sprühnebel ("Reduktionsmittel-Spray") erforderlich. Um unerwünschte Ablagerungen des Reduktionsmittels in der Abgasanlage zu vermeiden, darf nur eine begrenzte Menge des Reduktionsmittels auf die Wände der Abgasanlage treffen.

DE 10 2013 223 296 offenbart ein Einspritzmodul zum Einspritzen eines Reduktionsmittels in den Abgasstrang eines Verbrennungsmotors mit wenigstens zwei Austrittsöffnungen zur Ausgabe jeweils eines Reduktionsmittel-Primärstrahls. Dabei sind die Austrittsöffnungen derart ausgebildet, dass die durch die Austrittsöffnungen austretenden Reduktionsmittel-Primärstrahlen im Abgasstrang aufeinander treffen, um einen Sprühnebel zu erzeugen.

Die WO 2012/157066 A1 offenbart eine gegenüberliegende Anordnung zweier Einspritzmodule.

Die DE 10 2011 087 195 A1 beschreibt ein Verfahren zum Erzeugen eines Sprühnebels, unter Ausnutzung eines sogenannten Coanda-Effekts.

### Offenbarung der Erfindung

Eine Aufgabe der Erfindung besteht darin, den durch eine Strahlkollision im Abgasstrang erzeugten Sprühnebel zu optimieren und insbesondere einen möglichst vollflächigen Sprühnebel ("Spray") mit einer möglichst homogenen Massenverteilung zu erzeugen.

Ein erfindungsgemäßes Einspritzmodul zum Einspritzen eines Reduktionsmittels in den Abgasstrang eines Verbrennungsmotors hat wenigstens zwei Austrittsöffnungen zur Ausgabe jeweils wenigstens eines Reduktionsmittel-Primärstrahls.

Dabei sind die Austrittsöffnungen derart ausgebildet, dass die durch die wenigstens zwei Austrittsöffnungen austretenden Reduktionsmittel-Primärstrahlen nicht vollflächig, sondern nur teilweise überlappend, aufeinander treffen, um durch die Kollision einen Sprühnebel im Abgasstrang zu erzeugen.

Die Erfindung umfasst auch ein Verfahren des Einspritzens eines Reduktionsmittels in den Abgasstrang eines Verbrennungsmotors, wobei das Verfahren einschließt, wenigstens zwei Reduktionsmittel-Primärstrahlen so in den Abgasstrang einzuspritzen, dass sie nicht vollflächig sondern nur teilweise überlappend aufeinander treffen, um einen geeigneten Sprühnebel im Abgasstrang zu erzeugen.

Auf diese Weise wird durch Strahlkollision im Abgasstrang ein flacher, vollflächiger Reduktionsmittel-Sprühnebel mit einer sehr homogenen Massenverteilung erzeugt, der sich optimal mit den durch den Abgasstrang strömenden Abgasen vermischt und so bei geringem Reduktionsmittelverbrauch eine effektive Schadstoffreduktion ermöglicht.

Um das erfindungsgemäße teilweise überlappende Aufeinandertreffen der Reduktionsmittel-Primärstrahlen zu verwirklichen, können die Austrittsöffnungen insbesondere gegeneinander versetzt und/oder gegeneinander verkippt angeordnet sein. Durch eine gegeneinander versetzte und/oder gegeneinander verkippte Anordnung der Austrittsöffnungen kann effektiv und mit einfachen Mitteln ein teilweise überlappendes Aufeinandertreffen der Reduktionsmittel-Primärstrahlen erreicht werden.

Erfindungsgemäß liegt die Überdeckung in einem Bereich von 40% bis 60% der Fläche der Primärstrahlen. Eine Überdeckung in diesem Bereich hat sich als besonders vorteilhaft für die Erzeugung eines möglichst homogenen Sprühnebels erwiesen.

In einer Ausführungsform haben die Austrittsöffnungen einen Abstand von weniger als 5 mm, insbesondere von weniger als 2 mm, voneinander, so dass die Primärstrahlen von ihrer jeweiligen Austrittsöffnung bis zum Kollisionspunkt kompakte Strahlen sind, die noch nicht in einzelne Tropfen zerfallen sind. Sind die Primärstrahlen bereits in einzelne Tropfen zerfallen, fehlen einzelnen Tropfen immer wieder Kollisionspartner; durch kompakte Strahlen wird die Kollision daher optimiert.

Erfindungsgemäß sind die Austrittsöffnungen so ausgebildet, dass die Reduktionsmittel-Primärstrahlen in einem Winkel von mehr als 30° aufeinander treffen, um die Kollision zwischen den beiden Primärstrahlen zu optimieren und eine optimale Zerstäubung der Primärstrahlen zu bewirken.

Erfindungsgemäß sind die Austrittsöffnungen so ausgebildet, dass die Reduktionsmittel-Primärstrahlen nach einer freien Wegstrecke von weniger als 10 mm, insbesondere von weniger als 5 mm, aufeinander treffen, um zu vermeiden, dass die Primärstrahlen vor dem Kollisionspunkt in einzelne Tropfen aufreißen.

Die Austrittsöffnungen haben vorzugsweise einen kreisrunden Querschnitt, da der Strahldurchmesser und der Austrittswinkel des Strahls bei einem kreisrunden Querschnitt genau definiert sind. Die Austrittsöffnungen können aber auch mit einem ovalen Querschnitt ausgebildet sein.

Die Erfindung umfasst auch einen Abschnitt eines Abgasstrangs eines Verbrennungsmotors in dem ein erfindungsgemäßes Einspritzmodul vorgesehen ist.

In einer Ausführungsform weist der Abschnitt des Abgasstrangs zusätzlich zum Einspritzmodul ein Abschirmblech auf, das derart ausgebildet und angeordnet ist, dass es ein Auftreffen des Sprühnebels auf eine Wand des Abgasstranges verhindert. Unerwünschte Ablagerungen des Reduktionsmittels, welche die Strömungseigenschaften im Abgasstrang negativ beeinflussen können, werden auf diese Weise zuverlässig verhindert.

Das Abschirmblech kann eine oder mehrere Öffnungen aufweisen, die eine definierte Strömung der Abgase durch das Abschirmblech ermöglichen, um das Strömungsverhalten der Abgase im Abgasstrang gezielt zu beeinflussen.

In einer Ausführungsform ist das Abschirmblech so angeordnet, dass zwischen dem Abschirmblech und wenigstens einer Wand des Abgasstrangs ein Stauraum ausgebildet ist. Im Betrieb entsteht im Stauraum ein Abgas-Überdruck, der eine Strömung von Abgasen durch im Abschirmblech ausgebildete Löcher bewirkt, was eine besonders effektive Vermischung der Abgase mit dem erfindungsgemäß zerstäubten Reduktionsmittel zur Folge hat.

In einer Ausführungsform ist ein zusätzliches Blech stromaufwärts des Einspritzmoduls angeordnet, um zu verhindern, dass der Reduktionsmittel-Sprühnebel an der Kollisionsstelle der Primärstrahlen durch die Abgasströmung verweht wird, und so eine sichere Sprühnebel-Erzeugung durch die Primärstrahlen zu gewährleisten.

In einer Ausführungsform sind stromaufwärts des Einspritzmoduls ein Oxidationskatalysator und stromabwärts des Einspritzmoduls ein Reduktionskatalysator angeordnet, um eine optimale Abgasreinigung zu bewirken. Das Einspritzmodul ist insbesondere in einem Verbindungskanal angeordnet, der den Ausgang des Oxidationskatalysators mit dem Eingang des Reduktionskatalysators strömungsmäßig verbindet, um das Reduktionsmittel den Abgasen unmittelbar vor dem Reduktionskatalysator zuzuführen.

In einer Ausführungsform wird die Strömungsrichtung der Abgase durch den Verbindungskanal geändert. Dies ermöglicht eine besonders kompakte Bauform des Abgasstrangs und bewirkt eine Verwirbelung der Abgasströmung. Eine solche Verwirbelung der Abgasströmung hat eine besonders effektive Vermischung der Abgase mit dem Reduktionsmittel-Sprühnebel zur Folge.

### Kurze Beschreibung der Figuren:

Figur 1 zeigt eine schematische Schnittansicht eines erfindungsgemäßen Abgasstrangs.
Figur 2 zeigt eine schematische Teilschnittansicht eines erfindungsgemäßen Einspritzmoduls.
Figur 3a zeigt die Kollision zweier Primärstrahlen, die vollflächig aufeinander treffen.
Figur 3b zeigt eine graphische Darstellung eines Sprühnebels, wie er durch die in Figur 3a gezeigte Kollision erzeugt wird.
Figur 4a zeigt die Kollision zweier Primärstrahlen, die mit geringer Überdeckung aufeinander treffen.
Figur 4b zeigt eine graphische Darstellung eines Sprühnebels, wie er durch die in Figur 4a gezeigte Kollision erzeugt wird.
Figur 5a zeigt die Kollision zweier Primärstrahlen 13 dargestellt, die mit einer erheblichen, aber nicht vollständigen Überdeckung aufeinandertreffen.
Figur 5b zeigt eine graphische Darstellung eines Sprühnebels, wie er durch die in Figur 5a gezeigte Kollision erzeugt wird.

### Figurenbeschreibung:

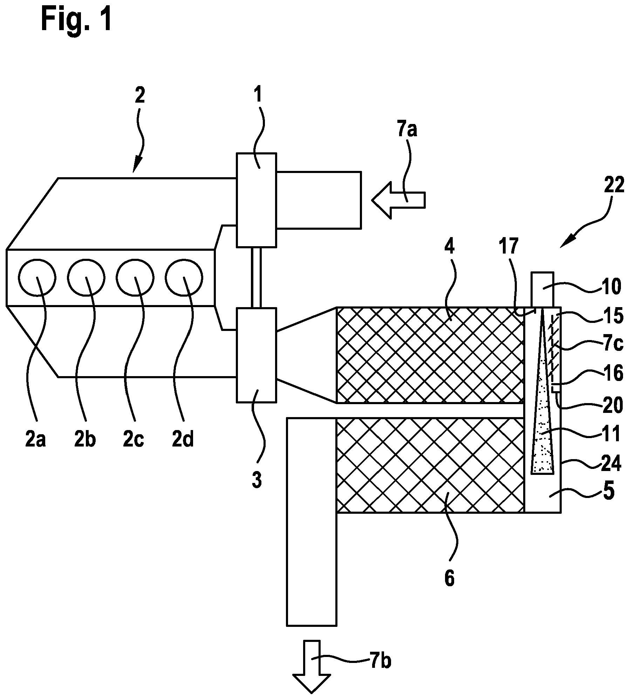

Figur 1 zeigt eine schematische Ansicht eines Verbrennungsmotors 2 mit einem Abgasstrang 22.

Frischluft 7a wird über einen Verdichter 1 eines Turboladers 1, 3 in die Zylinder 2a-2d des Motors 2 gefördert. Die im Betrieb in den Zylindern 2a-2d entstehenden Abgase gelangen durch eine Turbine 3 des Turboladers 1, 3, die den Verdichter 1 antreibt, in einen stromabwärts des Verbrennungsmotors 2 angeordneten Oxidationskatalysator 4.

Neben dem Oxidationskatalysator 4 befindet sich ein Reduktionsmittelkatalysator 6. Dieser kann als SCR-Katalysator 6 oder als Partikelfilter mit einer SCR-Kat-Beschichtung ausgebildet sein. Der Ausgang des Oxidationskatalysators 4 und der Eingang des Reduktionsmittelkatalysators 6 sind durch einen Verbindungskanal 5 strömungsmäßig miteinander verbunden, so dass die Abgase aus dem Oxidationskatalysator 4 durch den Verbindungskanal 5 in den Reduktionsmittelkatalysator 6 strömen. Die durch die Katalysatoren 4, 5 gereinigten Abgase 7b treten aus dem Reduktionsmittelkatalysator 6 in die Umgebung aus.

An dem Verbindungskanal 5 ist ein erfindungsgemäßes Einspritzmodul 10 angebracht, das von einem üblichen und daher nicht im Detail gezeigten Reduktionsmitteldosiersystem mit einem flüssigen Reduktionsmittel, insbesondere einer wässrigen Harnstofflösung ("AdBlue®"), versorgt wird.

Das Einspritzmodul 10 erzeugt im Betrieb im Verbindungskanal 5 zwischen dem Oxidationskatalysator 4 und dem Reduktionsmittelkatalysator 6 einen Reduktionsmittel-Sprühnebel 11.

Um zu verhindern, dass der Reduktionsmittel-Sprühnebel 11 durch die aus dem Oxidationskatalysator 4 austretende Abgasströmung gegen die dem Oxidationskatalysator 4 gegenüberliegende (in der Figur 1 rechts dargestellte) Wand 24 des Verbindungskanals 5 gedrückt wird und sich dort unerwünschte Reduktionsmittel-Ablagerungen ausbilden, ist vor der Wand 24, insbesondere zwischen dem Einspritzmodul 10 und der Wand 24, ein Abschirmblech 20 angeordnet. Das Abschirmblech 20 ist schmaler als der Verbindungskanal 5, so dass seitlich (in der Darstellung der Figur 1 oberhalb) des Abschirmblechs 20 ein Teil der aus dem Oxidationskatalysator 4 austretenden Abgasströmung in einen zwischen der Wand 24 des Verbindungskanals 5 und dem Abschirmblech 20 ausgebildeten Stauraum 15 strömt und dort einen Überdruck ("Straudruck") erzeugt.

Durch in dem Abschirmblech 20 ausgebildete Öffnungen 16 strömen die Abgase aus dem Stauraum 15 in einen Bereich auf der dem Oxidationskatalysator 4 zugewandten Seite des Abschirmblechs 20, wo sie sich mit dem Reduktionsmittel-Sprühnebel 11 vermischen. Die Abgasströmung aus dem Stauraum 15 durch die Öffnungen 16 in den Bereich des Sprühnebels 11 ist durch Abgasströmungspfeile 7c symbolisiert. Das Abschirmblech 20 kann insbesondere als kostengünstiges Lochblech ausgeführt sein.

Ein zusätzliches Ablenkblech 17 kann stromaufwärts neben dem Einspritzmodul 10 montiert sein, um ein Verwehen des Reduktionsmittel-Sprühnebels 11 am Kollisionspunkt P der Primärstrahlen zu verhindern und so eine sichere Sprühnebel-Erzeugung zu gewährleisten.

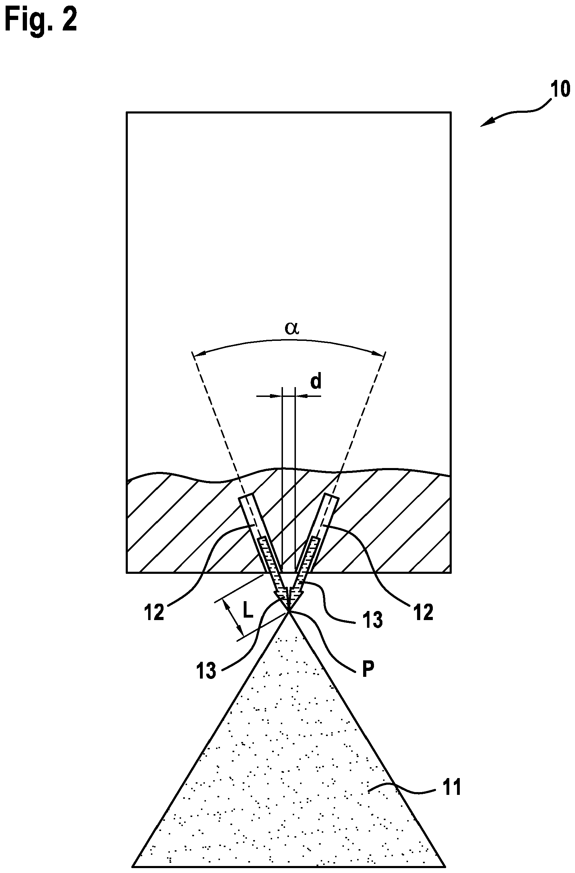

Figur 2 zeigt das dem Verbindungskanal 5 zugewandte Ende des Einspritzmoduls 10 in einer vergrößerten Teilschnittdarstellung. Das in der Figur 2 gezeigte Einspritzmodul 10 hat zwei Austrittsöffnungen 12 für das Reduktionsmittel, durch die im Betrieb jeweils ein Reduktionsmittel-Primärstrahl 13 austritt. Weitere, in den Figuren nicht gezeigte Ausführungsbeispiele erfindungsgemäßer Einspritzmodule 10 können zusätzliche Austrittsöffnungen 12 aufweisen.

Die aus den Austrittsöffnungen 12 austretenden Primärstrahlen 13 kollidieren innerhalb des in der Fig. 2 nicht gezeigten Verbindungskanals 5 im Bereich vor dem Einspritzmodul 10. Aufgrund des jeweiligen Impulses der Primärstrahlen 13 wird im Verbindungskanal durch die Kollision nach dem "Collision-Beam-Prinzip" ein fein zerstäubter Reduktionsmittel-Sprühnebel 11 erzeugt. Der auf diese Weise erzeugte Reduktionsmittel-Sprühnebel 11 ist vollflächig und flach.

Der Abstand d zwischen den Austrittsöffnungen 12 beträgt weniger als 5 mm, insbesondere weniger als 2 mm. Aufgrund des geringen Abstandes d zwischen den Austrittsöffnungen 12 sind die Primärstrahlen 13 im Bereich zwischen den Austrittsöffnungen 12 und dem Kollisionspunkt P der beiden Primärstrahlen 13 kompakte Strahlen, die noch nicht in einzelne Tropfen aufgerissen sind; Durch das Aufeinandertreffen kompakter Primärstrahlen 13 wird die Kollision optimiert, da jeder Teil eines ersten Primärstrahls 13 auf einen korrespondierenden Teil eines zweiten Primärstrahls 13 trifft und keine Lücken in den Primärstrahlen 13 vorhanden sind, in denen keine Kollision auftritt.

Die Austrittsöffnungen 12 haben vorzugsweise einen kreisrunden Querschnitt, da der Strahldurchmesser und der Austrittswinkel des Primärstrahls 13 bei einem kreisrunden Querschnitt genau definiert sind. Die Austrittsöffnungen 12 können aber auch mit einem ovalen Querschnitt ausgebildet sein.

Es können auch weitere, in der Figur 2 nicht gezeigte, Austrittsöffnungen 12 vorhanden sein, um zusätzliche Primärstrahlen 13 zu erzeugen, die vorzugsweise auf den selben Kollisionspunkt P ausgerichtet sind. Alternativ können mehrere Kollisionspunkte P vorhanden sein, auf die jeweils wenigstens zwei Primärstrahlen 13 ausgerichtet sind, so dass mit jedem Kollisionspunkt P eine Sprühnebelquelle im Verbindungskanal 5 vorhanden ist.

Die Austrittsöffnungen 12 sind so ausgebildet, dass die Primärstrahlen 13 in einem Winkel α von mehr als 30° aufeinander treffen, um die Kollision zwischen den beiden Primärstrahlen 13 zu optimieren und auf diese Weise eine optimale Zerstäubung der Primärstrahlen 13 zu bewirken, wodurch im Verbindungskanal 5 ein besonders feiner Sprühnebel 11 erzeugt wird und sich das Reduktionsmittel besonders effektiv mit den Abgasen im Abgasstrang 22 vermischt.

Die Austrittsöffnungen 12 sind so ausgebildet, dass die Primärstrahlen 13 nach einer freien Wegstrecke L, d.h. nach dem Austritt aus ihrer jeweiligen Austrittsöffnung 12, von weniger als 10 mm, insbesondere von weniger als 5 mm, aufeinander treffen. Auf diese Weise wird zuverlässig vermieden, dass die Primärstrahlen 13 vor dem Kollisionspunkt P in einzelne Tropfen zerfallen, wodurch die Effektivität der Sprühnebelerzeugung verringert werden würde.

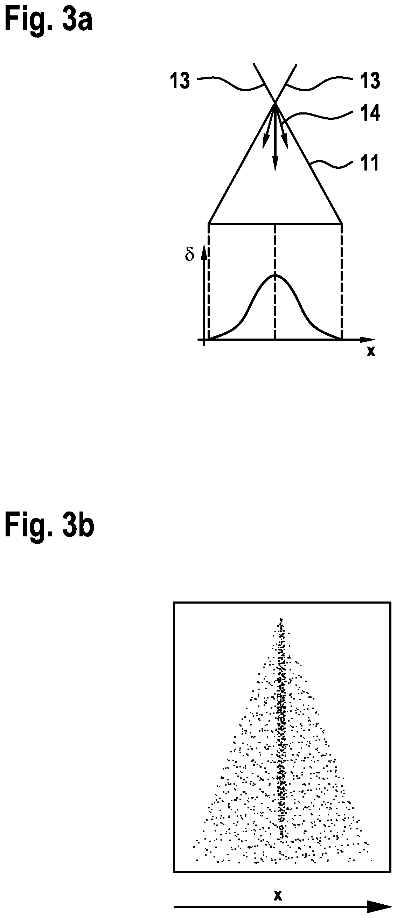

In der Figur 3a ist die Kollision zweier Primärstrahlen 13, die vollflächig aufeinander treffen, schematisch dargestellt. Der Sprühnebel 11, der bei einer derartigen vollflächigen Kollision der Primärstrahlen 13 erzeugt wird, hat eine inhomogene Massenverteilung, wobei der größte Massenanteil des Reduktionsmittels im Zentrum des Sprühnebels 11 vorhanden ist.

Die Pfeile 14 zeigen die bevorzugten Strömungsrichtungen der bei der Kollision erzeugten Tröpfchen an, wobei die Länge und die Stärke der Pfeile 14 proportional zur Massendichte in der jeweiligen Richtung sind. Unterhalb des Sprühnebels 11 ist in der Figur 3a die Massenverteilung δ des Sprühnebels 11 in einem graphischen Diagramm als Funktion der Position x entlang der Breite des Sprühnebels 11 dargestellt.

Figur 3b zeigt eine schematische graphische Darstellung eines solchen Sprühnebels 11, wie er bei einer vollflächigen Kollision der Primärstrahlen 13 erzeugt wird. In der Darstellung der Figur 3b ist die Dichte der Punkte proportional zur Massendichte δ. Sowohl im graphischen Diagramm der Figur 3a als auch in der Darstellung der Figur 3b ist die erhöhte Massenkonzentration im Zentrum des Sprühnebels 11 deutlich zu erkennen.

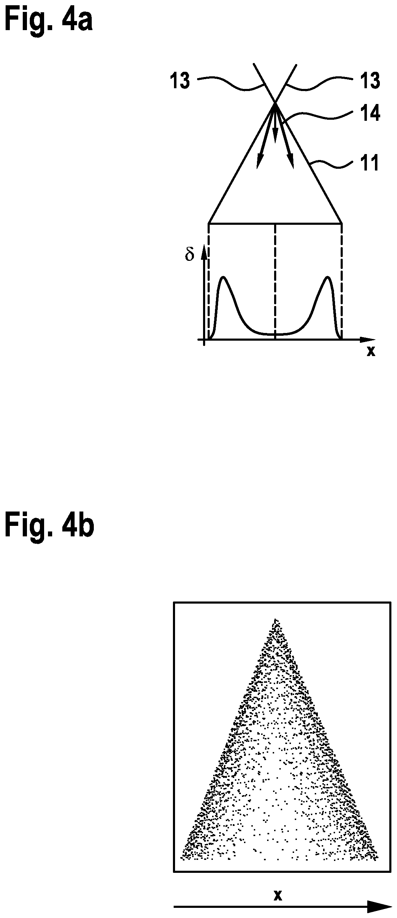

In der Figur 4a ist die Kollision zweier Primärstrahlen 13 dargestellt, die mit einer Überdeckung aufeinandertreffen, die erheblich kleiner als die jeweilige Fläche der beiden Primärstrahlen 13 ist.

Auch ein auf diese Weise erzeugter Sprühnebel 11 besitzt eine inhomogene Massenverteilung.

Im Fall geringer Überdeckung der Primärstrahlen ist der größte Massenanteil des Reduktionsmittels an den Rändern des Sprühnebels 11 vorhanden. Die Pfeile 14 zeigen erneut die bevorzugten Strömungsrichtungen der bei der Kollision erzeugten Tröpfchen an, wobei die Länge und die Stärke der Pfeile 14 proportional zur Massendichte in der jeweiligen Richtung sind. Unterhalb des Sprühnebels 11 ist erneut die Massendichte δ des Sprühnebels 11 als Diagramm über die Breite des Sprühnebels 11 dargestellt.

Figur 4b zeigt eine graphische Darstellung eines solchen Sprühnebels 11, wobei die Punktdichte wieder proportional zur Massendichte δ ist.

Sowohl im graphischen Diagramm der Figur 4a als auch in der Darstellung der Figur 4b ist die höhere Massendichte δ an den Rändern des Sprühnebels 11 deutlich erkennbar.

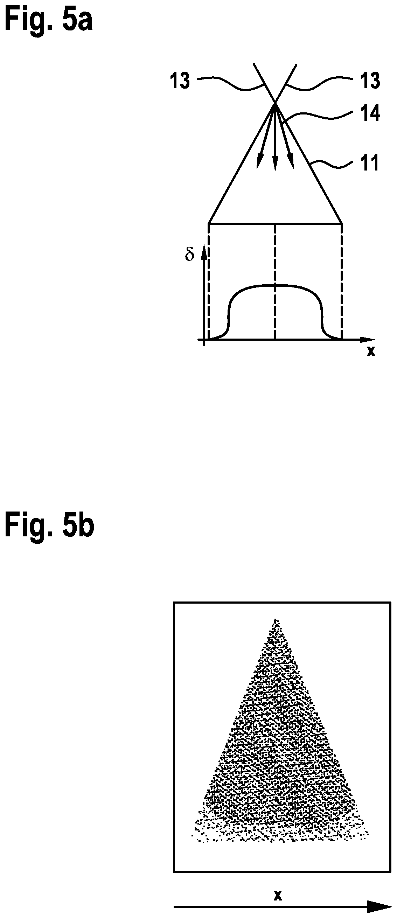

In der Figur 5a ist die Kollision zweier Primärstrahlen 13 dargestellt, welche mit einer erheblich größeren Überdeckung als in den Figuren 4a und 4b, aber nicht mit einer vollständigen Überdeckung, wie sie in den Figuren 3a und 3b gezeigt ist, aufeinander treffen.

Durch die größere, aber nicht vollständige Überdeckung der beiden Primärstrahlen 13 wird die Masse des Reduktionsmittels gleichmäßig sowohl in das Zentrum des Sprühnebels 11 als auch in seine Randbereiche transportiert. Die Pfeile 14 zeigen die bevorzugten Strömungsrichtungen der bei der Kollision erzeugten Tröpfchen, wobei die Länge und die Stärke der Pfeile 14 proportional zur Massendichte in der jeweiligen Strömungsrichtung ist. Die Pfeile 14 weisen für alle Richtungen im Wesentlichen die gleiche Dichte und Länge auf.

Unterhalb des Sprühnebels 11 ist erneut die Massendichte δ des Sprühnebels 11 graphisch über die Breite des Sprühnebels 11 dargestellt. Figur 5b zeigt eine graphische Darstellung eines solchen Sprühnebels 11, wobei die Punktdichte proportional zur Massendichte δ ist.

Sowohl im graphischen Diagramm der Figur 5a als auch in der Darstellung der Figur 5b ist, insbesondere im direkten Vergleich mit den Figuren 3a, 3b, 4a und 4c, die sehr homogene Massenverteilung im Sprühnebel 11 deutlich zu erkennen.

Als besonders geeignet hat sich eine Überdeckung der Primärstrahlen 13 im Bereich von 40% bis 60% der Fläche der Primärstrahlen 13 erwiesen. Mit Überdeckungen in diesem Bereich lässt sich ein Sprühnebel 11 mit einer besonders homogenen Massenverteilung erzeugen.

## Patentansprüche

1. Einspritzmodul (10) zum Einspritzen eines Reduktionsmittels in den Abgasstrang (22) eines Verbrennungsmotors (2),
wobei das Einspritzmodul (10) wenigstens zwei Austrittsöffnungen (12) zur Ausgabe jeweils wenigstens eines Reduktionsmittel-Primärstrahls (13) aufweist, wobei die Austrittsöffnungen (12) derart ausgebildet sind, dass die durch die Austrittsöffnungen (12) austretenden Reduktionsmittel-Primärstrahlen (13) aufeinander treffen und einen Sprühnebel (11) im Abgasstrang (22) erzeugen,
**dadurch gekennzeichnet, dass** die Austrittsöffnungen (12) derart ausgebildet sind, dass die durch die Austrittsöffnungen (12) austretenden Reduktionsmittel-Primärstrahlen (13) nur teilweise überlappend aufeinander treffen, wobei die Austrittsöffnungen (12) so ausgebildet sind, dass die Reduktionsmittel-Primärstrahlen (13) nach einer freien Wegstrecke (L) von weniger als 10 mm, insbesondere von weniger als 5 mm, aufeinander treffen, und wobei die Überdeckung in einem Bereich von 40% bis 60% der Fläche der Primärstrahlen (13) liegtund wobei die Austrittsöffnungen (12) so ausgebildet sind, dass die Reduktionsmittel-Primärstrahlen (13) in einem Winkel (α) von mehr als 30° aufeinander treffen.

2. Einspritzmodul (10) nach Anspruch 1, wobei die Austrittsöffnungen (12) gegeneinander versetzt und/oder verkippt ausgebildet sind.

3. Abschnitt eines Abgasstrangs (22) eines Verbrennungsmotors (2) mit einem Einspritzmodul (10) nach einem der vorhergehenden Ansprüche..

4. Abschnitt eines Abgasstrangs (22) nach Anspruch 3, mit einem Abschirmblech (20), das derart ausgebildet und angeordnet ist, dass es ein Auftreffen des Sprühnebels (11) auf eine Wand (24) des Abgasstrangs (22) verhindert, wobei das Abschirmblech (20) insbesondere eine oder mehrere Öffnungen (16) aufweist.

5. Abschnitt eines Abgasstrangs (22) nach einem der Ansprüche 3 oder 4, wobei stromaufwärts des Einspritzmoduls (10) ein Oxidationskatalysator (4) und stromabwärts des Einspritzmoduls (10) ein Reduktionskatalysator (6) angeordnet ist, wobei das Einspritzmodul (10) insbesondere in einem Verbindungskanal (5) zwischen dem Oxidationskatalysator (4) und dem Reduktionskatalysator (6) angeordnet ist und wobei die Strömungsrichtung der Abgase durch den Verbindungskanal (5) umgelenkt wird.

6. Verfahren des Einspritzens eines Reduktionsmittels in den Abgasstrang (22) eines Verbrennungsmotors (2), **dadurch gekennzeichnet, dass** das Verfahren umfasst, wenigstens zwei Reduktionsmittel-Primärstrahlen (13) so in den Abgasstrang (22) einzuspritzen, dass sie nur teilweise überlappend aufeinander treffen, um in einem Bereich des Abgasstrangs (22) einen Reduktionsmittel-Sprühnebel (11) zu erzeugen, wobei die Reduktionsmittel-Primärsrahlen (13) nach einer freien Wegstrecke (L) von weniger als 10mm, insbesondere von weniger als 5mm, aufeinander treffen, undwobei die Überdeckung in einem Bereich von 40% bis 60% der Fläche der Primärstrahlen (13) liegtund wobei die Austrittsöffnungen (12) so ausgebildet sind, dass die Reduktionsmittel-Primärstrahlen (13) in einem Winkel (α) von mehr als 30° aufeinander treffen.

## Claims

1. Injection module (10) for injecting a reducing agent into the exhaust tract (22) of an internal combustion engine (2),
wherein the injection module (10) has at least two outlet openings (12) for discharging in each case at least one reducing agent primary jet (13), wherein the outlet openings (12) are designed such that the reducing agent primary jets (13) emerging through the outlet openings (12) collide with one another and produce a spray mist (11) in the exhaust tract (22),
**characterized in that** the outlet openings (12) are designed such that the reducing agent primary jets (13) emerging through the outlet openings (12) collide with one another with only a partial overlap, wherein the outlet openings (12) are designed such that the reducing agent primary jets (13) collide with one another after a free travelling distance (L) of less than 10 mm, in particular of less than 5mm, and wherein the overlap lies in a range of 40% to 60% of the area of the primary jets (13), and wherein the outlet openings (12) are designed such that the reducing agent primary jets (13) collide with one another at an angle (α) of greater than 30°.

2. Injection module (10) according to Claim 1, wherein the outlet openings (12) are designed so as to be offset and/or tilted relative to one another.

3. Section of an exhaust tract (22) of an internal combustion engine (2) having an injection module (10) according to either of the preceding claims.

4. Section of an exhaust tract (22) according to Claim 3, having a shield plate (20) which is designed and arranged such that it prevents the spray mist (11) from impinging on a wall (24) of the exhaust tract (22), wherein the shield plate (20) has, in particular, one or more openings (16).

5. Section of an exhaust tract (22) according to either of Claims 3 and 4, wherein an oxidation catalytic converter (4) is arranged upstream of the injection module (10) and a reduction catalytic converter (6) is arranged downstream of the injection module (10), wherein the injection module (10) is arranged in particular in a connecting duct (5) between the oxidation catalytic converter (4) and the reduction catalytic converter (6), and wherein the flow direction of the exhaust gases is diverted by the connecting duct (5).

6. Method for injecting a reducing agent into the exhaust tract (22) of an internal combustion engine (2), **characterized in that** the method comprises the injection of at least two reducing agent primary jets (13) into the exhaust tract (22) such that said reducing agent primary jets collide with one another, with only a partial overlap, in order to produce a reducing agent spray mist (11) in a region of the exhaust tract (22), wherein the reducing agent primary jets (13) collide with one another after a free travelling distance (L) of less than 10mm, in particular of less than 5mm, and wherein the overlap lies in a range of 40% to 60% of the area of the primary jets (13), and wherein the outlet openings (12) are designed such that the reducing agent primary jets (13) collide with one another at an angle (α) of greater than 30°.

## Revendications

1. Module d'injection (10) destiné à injecter un agent réducteur dans la conduite de gaz d'échappement (22) d'un moteur à combustion interne (2),
le module d'injection (10) comportant au moins deux ouvertures de sortie (12) destinées à délivrer chacune au moins un jet primaire d'agent réducteur (13),
les ouvertures de sortie (12) étant formées de manière à ce que les jets primaires d'agent réducteur (13) sortant par les ouvertures de sortie (12) se rencontrent et produisent un brouillard de pulvérisation (11) dans la conduite de gaz d'échappement (22), **caractérisé en ce que** les ouvertures de sortie (12) sont formées de manière à ce que les jets primaires d'agent réducteur (13) sortant par les ouvertures de sortie (12) ne se chevauchent que partiellement, les ouvertures de sortie (12) étant formées de telle sorte que les jets primaires d'agent réducteur (13) se rencontrent au bout d'une distance libre (L) inférieure à 10 mm, en particulier inférieure à 5 mm, et le chevauchement étant dans la plage de 40 % à 60 % de la surface des jets primaires (13) et les ouvertures de sortie (12) étant conçues de telle sorte que les jets primaires d'agent réducteur (13) se rencontrent suivant un angle (α) supérieur à 30° l'un par rapport à l'autre.

2. Module d'injection (10) selon la revendication 1, les ouvertures de sortie (12) étant décalées et/ou inclinées les unes par rapport aux autres.

3. Partie d'une conduite de gaz d'échappement (22) d'un moteur à combustion interne (2), la partie comprenant un module d'injection (10) selon l'une des revendications précédentes.

4. Partie d'une conduite de gaz d'échappement (22) selon la revendication 3, la partie comprenant une plaque de protection (20) qui est conçue et disposée de manière à empêcher un brouillard de pulvérisation (11) de rencontrer une paroi (24) de la conduite de gaz d'échappement (22), la plaque de protection (20) comportant notamment au moins une ouverture (16).

5. Partie d'une conduite de gaz d'échappement (22) selon l'une des revendications 3 ou 4, un catalyseur à oxydation (4) étant disposé en amont du module d'injection (10) et un catalyseur à réduction (6) étant disposé en aval du module d'injection (10), le module d'injection (10) étant disposé en particulier dans un conduit de liaison (5) situé entre le catalyseur à oxydation (4) et le catalyseur à réduction (6), et le sens d'écoulement des gaz d'échappement étant dévié par le conduit de liaison (5).

6. Procédé d'injection d'un agent réducteur dans le conduit de gaz d'échappement (22) d'un moteur à combustion interne (2), **caractérisé en ce que** le procédé comprend l'injection d'au moins deux jets primaires d'agent réducteur (13) dans la conduite de gaz d'échappement (22) de telle sorte qu'ils ne se chevauchent que partiellement pour produire un brouillard de pulvérisation d'agent réducteur (11) dans une zone de la conduite de gaz d'échappement (22), les jets primaires d'agent réducteur (13) se rencontrant au bout d'une distance libre (L) inférieure à 10 mm, en particulier inférieure à 5 mm, et le chevauchement étant dans la plage de 40 % à 60 % de la surface des jets primaires (13) et les ouvertures de sortie (12) étant conçues de telle sorte que les jets primaires d'agent réducteur (13) se rencontrent suivant un angle (α) supérieur à 30° l'un par rapport à l'autre.
